(19) Europäisches Patentamt
European Patent Office
Office européen des brevets

(11) Numéro de publication: 0 007 265
B1

(12) **FASCICULE DE BREVET EUROPEEN**

(45) Date de publication du fascicule de brevet: 14.04.82

(51) Int. Cl.³: C 08 G 18/67, C 08 G 18/44

(21) Numéro de dépôt: 79400416.8

(22) Date de dépôt: 22.06.79

(54) **Polycarbonates-uréthannes insaturés utilisables dans des compositions photoréticulables; film obtenu à partir d'une telle composition.**

(30) Priorité: 19.07.78 FR 7821456

(43) Date de publication de la demande: 23.01.80 Bulletin 80/2

(45) Mention de la délivrance du brevet: 14.04.82 Bulletin 82/15

(84) Etats contractants désignés: BE CH DE GB IT LU NL SE

(56) Documents cités:
FR-A-2014616
FR-A-2342327

(73) Titulaire: SOCIETE NATIONALE DES POUDRES ET EXPLOSIFS, 12, quai Henri IV, F-75181 PARIS CEDEX 04 (FR)

(72) Inventeur: Coqueugniot, Annick, 85, rue de l'Abbaye, F-91610 Ballancourt (FR)
Inventeur: Bruggeman, Robert, 33, rue Blanchard, F-91610 Ballancourt (FR)
Inventeur: Piteau, Marc, 38, avenue de Ballancourt, F-91710 Itteville (FR)

EP 0 007 265 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Polycarbonates-uréthannes insaturés utilisables dans des compositions photoréticulables; film obtenu à partir d'une telle composition

La présente invention concerne les compositions photoréticulables pouvant par exemple servir de base aux vernis, peintures et encres. D'une façon plus précise, la présente invention se rapporte à de nouvelles compositions photoréticulables à base de poly(carbonates-uréthannes) à terminaisons acryliques ou méthacryliques.

L'invention concerne également, à titre de produits industriels nouveaux, les poly(carbonates-uréthannes) à terminaisons acryliques ou méthacryliques.

Les oligomères insaturés constituent une base essentielle des produits devant sécher et durcir sous les rayons ultraviolets comme les vernis, les peintures et les encres. Les matières photoréticulables usuellement employées dans l'industrie sont des polymères à terminaisons acryliques ou éventuellement méthacryliques, ces terminaisons possédant une aptitude particulière à réticuler sous l'action des rayons ultraviolets naturels ou artificiels. En général, ces terminaisons acryliques ou méthacryliques sont portées par un polymère de type polyuréthanne, polyester ou époxy. Une famille de diols particulièrement utilisée dans ce type de formulations est celle des polyesterdiols. De telles formulations sont, par exemple, décrites dans les brevets français N[os] 2054213, 2170463 et 2197932. Ainsi, le brevet français N° 2170463 décrit par exemple des polyuréthannes ramifiés à terminaisons acrylates ou méthacrylates.

Néanmoins, ces formulations présentent un inconvénient important, à savoir une mauvaise adhérence sur un certain nombre de supports et, notamment, sur les supports métalliques; cet inconvénient est par exemple mentionné dans la demande de brevet allemand DOS N° 2531180. Une solution préconisée dans cette demande consiste à employer dans les formulations photoréticulables les oligocarbonates de formule générale:

$$CH_2{=}(CX){-}COORO - \left[ COOR'OCOOR''O \right]_n - COOR''OCOOROCOC(X){=}CH_2$$

dans laquelle:
- X représente soit l'hydrogène, soit un groupe méthyle,
- R, R' et R'' représentent des restes hydrocarbonés, et
- n est un nombre entier, soit nul, soit supérieur ou égal à l'unité, mais qui, dans les exemples donnés, ne dépasse pas la valeur 5.

Ces produits présentent une adhérence améliorée sur les différents supports, mais ont des propriétés physiques médiocres qui les rendent peu intéressants pour un usage industriel. Des compositions analogues sont également décrites dans le brevet français N° 2344870.

On a également cherché à fabriquer des polyuréthannes de polycarbonates contenant des insaturations. Le brevet français N° 2014616 décrit par exemple des polyuréthannes obtenus à partir de polyisocyanates et de polycarbonates aliphatiques hydroxytéléchéliques, dans lesquels ont été polymérisés *in situ* des composés insaturés tels que des acrylates, des acrylonitriles, du styrène, des oléfines.

Ces polyuréthannes comportent un nombre indéterminé de fonctions polyuréthannes réparties de façon aléatoire dans la chaîne du polymère; ces polyuréthannes ne sont toutefois pas photoréticulables mais sont employés en tant que produits moulables.

La titulaire a maintenant découvert que certains poly(carbonates-uréthannes) à terminaisons acryliques ou méthacryliques permettent d'obtenir des compositions photoréticulables présentant à la fois de très bonnes propriétés physiques après réticulation et une bonne adhérence sur les principaux supports habituellement utilisés et, en particulier, sur les supports métalliques et les supports organiques. Les compositions photoréticulables selon l'invention présentent par ailleurs une résistance à l'hydrolyse améliorée par rapport aux compositions classiques.

Les poly(carbonates-uréthannes) à terminaisons acryliques ou méthacryliques selon l'invention répondent à la formule générale suivante:

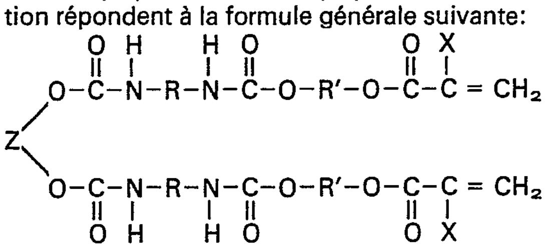

dans laquelle:
- X représente soit l'hydrogène, soit le groupe méthyle,
- R représente un reste alkylène, cycloalkylène ou arylène, substitué ou non substitué,
- R' représente un reste alkylène inférieur,
- Z représente une chaîne polycarbonate provenant d'un polycarbonate linéaire aliphatique ou cycloaliphatique hydroxytéléchélique, et
- C, H, N, O représentent respectivement le carbone, l'hydrogène, l'azote et l'oxygène.

Une famille préférée de poly(carbonates-uréthannes) à terminaisons acryliques ou méthacryliques selon l'invention répond à la formule générale suivante:

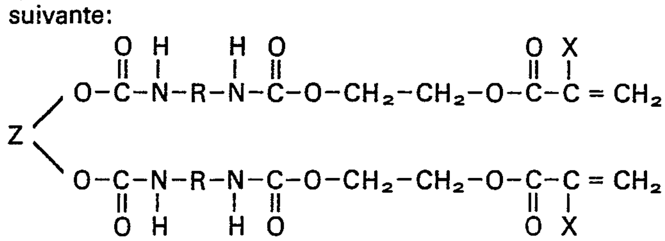

dans laquelle X, R, Z, C, H, N, O ont la même signification que précédemment.

Les poly(carbonates-uréthannes) à terminaisons acryliques ou méthacryliques selon l'invention sont obtenus par condensation d'un polycarbonate linéaire aliphatique ou cycloaliphatique hydroxytéléchélique et d'un diisocyanate avec un hydroxyalkylacrylate ou méthacrylate inférieur dans des rapports stœchiométriques. Deux voies d'obtention sont possibles. Une première voie consiste à condenser dans un premier temps l'hydroxyalkylacrylate ou méthacrylate avec le diisocyanate et à faire réagir sur le produit ainsi obtenu le polycarbonate hydroxytéléchélique. Une deuxième voie consiste à condenser dans un premier temps le diisocyanate avec le polycarbonate hydroxytéléchélique et à faire réagir sur le produit ainsi obtenu l'hydroxyalkylacrylate ou méthacrylate.

On peut utiliser les différents diisocyanates aliphatiques, cycloalihatiques ou aromatiques existant sur le marché. A titre d'exemple, on peut citer l'hexaméthylènediisocyanate, l'isophoronediisocyanate ou méthylène isocyanato-1, isocyanato-5, triméthyl-1,3,3,-cyclohexane, le diisocyanato-2,4-toluène, le diisocyanato-4,4'-bis-cyclohexylméthane, le triméthyl-2,2,4- hexaméthylènediisocyanate ou le méthylène-bis-phényldiisocyanate.

Selon une variante préférée de réalisation de l'invention, on choisira les diisocyanates dont les deux groupes fonctionnels NCO n'ont pas la même réactivité en raison de leur localisation différente sur la molécule, comme c'est par exemple le cas pour l'isophoronediisocyanate ou le toluènediisocyanate.

A titre de polycarbonates hydroxytéléchéliques, on peut utiliser les polycarbonates linéaires aliphatiques ou cycloaliphatiques hydroxytéléchéliques de masse molaire comprise entre 500 et 3000 obtenus par phosgénation ou transestérification de diols ou de mélange de diols aliphatiques ou cycloaliphatiques tels que, par exemple, le butanediol-1,4, le butanediol-1,3, le pentanediol-1,5, l'hexanediol-1,6, l'heptanediol-1,7, l'octanediol-1,8, le di- (éthylèneglycol), le tri(éthylène glycol), le cyclohexanediol, le cyclohexanediméthanol, le tétraméthyl-2,2,4,4-cyclobutanediol-1,3.

A titre d'hydroxyalkylacrylate ou méthacrylate, on peut utiliser les différents hydroxyalkylacrylates ou méthacrylates inférieurs et, notamment, l'hydroxyéthylacrylate ou méthacrylate.

La synthèse des poly(carbonates-uréthannes) acryliques ou méthacryliques selon l'invention se fait à température ambiante ou modérée, de préférence entre environ 40 et 70°C. Pour éviter une réticulation non souhaitée des insaturations acryliques ou méthacryliques, on ajoute au mélange réactionnel de petites quantités de stabilisant, c'est-à-dire d'un inhibiteur de réticulation. On peut citer à titre de stabilisant des composés comme la phénothiazine ou l'hydroquinone. Si, à température modérée, le mélange réactionnel demeure trop visqueux, on peut utiliser un solvant inerte tel que, par exemple, un hydrocarbure aliphatique chloré comme le chlorure de méthylène, le chloroforme ou le tétrachlorure de carbone. De manière à pouvoir effectuer aisément la synthèse à température ambiante ou à température peu supérieure à celle ambiante, on préfèrera les polycarbonates hydroxytéléchéliques liquides à température ambiante et obtenus par phosgénation ou transestérification d'un mélange d'au moins deux diols tels que décrits, par exemple, dans le brevet français N° 2349612 au nom de la titulaire.

Les poly(cabonates-uréthannes) acryliques ou méthacryliques selon l'invention qui, dans la suite du texte, seront désignés par poly(carbonates-uréthannes) à insaturations acryliques permettent d'obtenir des compositions photoréticulables présentant à la fois de très bonnes propriétés physiques après réticulation et une bonne adhérence sur les principaux supports usuels et, en particulier, sur les supports métalliques comme l'aluminium ou le fer et sur les supports organiques tels que les supports en polycarbonates, en chlorure de polyvinyle et en polyuréthanne.

D'autres supports, comme le bois ou le papier, peuvent également être utilisés avec les compositions photoréticulables selon l'invention. Les compositions photoréticulables selon l'invention permettent un étalement aisé sur le support et présentent également une résistance à l'hydrolyse améliorée par rapport aux compositions classiques.

Les compositions photoréticulables selon l'invention contiennent trois composants principaux, à savoir:

- un poly(carbonate-uréthanne) à insaturations acryliques constituant la base de la composition,
- un monomère insaturé, solvant réactif du poly(carbonate-uréthanne) à insaturations acryliques, permettant d'abaisser la viscosité de la formulation, de corriger les propriétés du polymère suivant le but recherché et d'augmenter la vitesse de réticulation, et
- un phono-initiateur.

Le monomère insaturé est en général un acrylate multifonctionnel de faible poids moléculaire comme, par exemple, le triacrylate de pentaérythritol, le triacrylate de triméthylolpropane, le diacrylate d'hexanediol-1,6, etc.

Le photo-initiateur est un composé qui, sous l'action d'un rayonnement ultraviolet, conduit à la formation de radicaux libres qui vont initier la copolymérisation du mélange poly(carbonate-uréthanne) à insaturations acryliques et monomère insaturé. A titre de photo-initiateurs usuels, on peut par exemple citer:

- les éthers de la benzoïne tels que le benzoïnediméthyléther de formule:

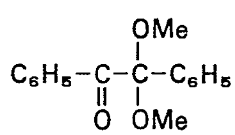

- les dérivés de l'acétophénone tels que la dié-

thoxyacétophénone ou la p-tertiobutyltrichloroacétophénone, et

— la benzophénone utilisée en mélange avec une amine telle que le diméthylaminoéthanol.

Dans la pratique, un quatrième composant, le stabilisant, est en général nécessaire pour augmenter la durée de vie en pot et, notamment, pour éviter que la copolymérisation ne démarre sous l'effet des radiations lumineuses environnantes. A titre de stabilisants usuels, on peut par exemple citer l'hydroquinone, la phénothiazine ou le p-hydroxyphénol,

La préparation d'une composition photoréticulable selon l'invention se fait selon le mode opératoire suivant:

— on fait fondre le poly(carbonate-uréthanne) à insaturations acryliques aux environs de 70° C,
— on ajoute la quantité choisie de monomère insaturé,
— on ajoute éventuellement le stabilisant et on commence à mélanger.

Après dissolution totale, on ajoute éventuellement les additifs bien connus de l'homme de métier tels que, notamment, les agents d'étalement, les promoteurs d'adhésion et les pigments organiques ou minéraux.

A titre d'agents d'étalement, on peut, par exemple, citer les résines silicone, les polyméthacrylates ou les copolymères acétate de vinyle/chlorure de vinyle.

A titre de promoteurs d'adhésion, on peut, par exemple, citer les silanes insaturés ou époxydés.

On procède alors à une nouvelle opération de mélange, de manière à assurer une homogénéité parfaite de la composition photoréticulable qui est alors prête à l'emploi après adjonction du photoinitiateur. Après étalement sur le support choisi, la réticulation s'effectue soit sous l'effet des rayons ultraviolets de la lumière naturelle, soit sous l'effet de rayons ultraviolets produits artificiellement, par exemple à l'aide d'une lampe spéciale.

La mise en œuvre de l'invention sera mieux comprise à l'aide des exemples non limitatifs donnés ci-après.

*Exemple 1:*

Dans un réacteur de 500 $cm^3$ et sous atmosphère d'azote, on place 87 g (0,5 mol) de toluènediisocyanate et 0,027 g de phénothiazine. La température étant maintenue entre 48 et 50° C, on additionne en 2 h 58 g (0,5 mol) d'hydroxyéthylacrylate fraîchement distillé. La coulée terminée, on agite encore 3 h à la même température puis on additionne 223 g (0,25 mol) d'un polycarbonate aliphatique diol de masse molaire 890, obtenu par phosgénation d'un mélange de butanediol-1,4 et d'hexanediol-1,6 en proportions telles que le polycarbonate obtenu soit équivalent à un mélange de 50% en masse d'un polycarbonate obtenu à partir d'henanediol-1,6 seul et de 50% en masse d'un polycarbonate obtenu à partir de butanediol-1,4 seul. On laisse la réaction se faire durant 3 h à 60° C. On ajoute quelques gouttes de méthanol pour neutraliser les éventuelles fonctions isocyanate libres qui auraient pu subsister.

On obtient un produit présentant un taux d'insaturation conjuguée de 1,49 Eq/kg pour un taux théorique de 1,36. Le produit se présente comme une huile visqueuse.

*Exemples 2 à 7:*

On procède selon le mode opératoire de l'exemple 1, les réactifs utilisés étant le polycarbonatediol de l'exemple 1, l'hydroxyéthylacrylate et le diisocyanate étant soit le toluène diisocyanate, soit l'isophoronediisocyanate. Les conditions opératoires et les résultats obtenus sont indiqués dans les tableaux I et II:

Tableau I — Conditions opératoires

| Exemple | Quantité de polycarbonate (g) | Quantité d'hydroxy-éthylacrylate (g) | Nature du diisocyanate | Quantité de diisocyanate (g) | Température de réaction (°C) |
|---|---|---|---|---|---|
| 2 | 667,5 | 174 | toluène diisocyanate | 261 | 65 |
| 3 | 667,5 | 174 | toluène diisocyanate | 261 | 65 |
| 4 | 223 | 58 | toluène diisocyanate | 87 | 75 |
| 5 | 882 | 232 | toluène diisocyanate | 348 | 75 |
| 6 | 222 | 58 | isophorone diisocyanate | 103 | 75 |
| 7 | 204,3 | 58 | isophorone diisocyanate | 103 | 75 |

Tableau II — Résultats

| Exemple | Masse obtenue (g) | Rendement (%) | Taux d'insaturations conjuguées | |
|---|---|---|---|---|
| | | | théorique | trouvé |
| 2 | 1050 | 98 | 1,36 Eq/kg | 1,60 Eq/kg |
| 3 | 1100 | 98,4 | 1,36 Eq/kg | 1,63 Eq/kg |
| 4 | 365 | 99 | 1,36 Eq/kg | 1,65 Eq/kg |
| 5 | 1430 | 98,1 | 1,36 Eq/kg | 1,60 Eq/kg |
| 6 | 365 | 95,5 | 1,30 Eq/kg | 1,35 Eq/kg |
| 7 | 345 | 98 | 1,30 Eq/kg | 1,38 Eq/kg |

*Exemple 8:*

On procède selon le mode opératoire de l'exemple 1, les réactifs utilisés étant le toluènediisocyanate, l'hydroxyéthylacrylate et un polycarbonatediol de masse molaire 1942, obtenu par phosgénation d'un mélange de butanediol-1,4 et d'hexanediol-1,6 en proportions telles que le polycarbonate obtenu soit équivalent à un mélange de 50% en masse d'un polycarbonate obtenu à partir d'hexanediol-1,6 seul et de 50% en masse d'un polycarbonate obtenu à partir de butanediol-1,4 seul. Les conditions opératoires sont les suivantes:

— quantité de polycarbonate: 1295 g
— quantité d'isocyanate: 386,7 g
— quantité d'hydroxyéthylacrylate: 154,6 g
— température de réaction: 75° C
— masse de produit obtenu: 1630 g
— rendement: 96,9%
— taux d'insaturations conjuguées:
théorique: 0,80 Eq/kg
trouvé: 0,82 Eq/kg

*Exemple 9:*

On procède selon le mode opératoire de l'exemple 1, les réactifs utilisés étant le toluènediisocyanate, l'hydroxyéthylacrylate et un polycarbonatediol de masse molaire 980, obtenu par phosgénation de di(éthylèneglycol). Les conditions opératoires sont les suivantes:

— quantité de polycarbonate: 236,5 g
— quantité d'isocyanate: 140 g
— quantité d'hydroxyéthylacrylate: 58 g
— température de réaction: 75° C
— masse de produit obtenu: 371 g
— rendement: 98,5%
— taux d'insaturations conjuguées:
théorique: 1,28 Eq/kg
trouvé: 1,30 Eq/kg

*Exemple 10:*

Dans un réacteur de 250 ml, on place 0,2 mol de toluènediisocyanate (35 g) et on additionne en 2 h 0,1 mol (89 g) du polycarbonate aliphatique diol utilisé dans l'exemple 1, en maintenant la température à 50° C. Après addition du polycarbonate, on laisse la réaction se terminer à 50° C sous agitation pendant 1 h. On ajoute alors 0,2 mol (23,2 g) d'hydroxyéthylacrylate et 0,18 g d'hydroquinone. On laisse la réaction se faire à 65° C pendant 2 h. On termine en ajoutant 3 g de méthanol pour que disparaissent les groupes NCO qui n'auraient pas réagi.

On obtient 129 g de produit présentant un taux d'insaturation conjuguée de 1,64 Eq/kg pour un taux théorique de 1,42 Eq/kg. Le rendement est de 92%.

*Exemple 11:*

On procède comme décrit dans l'exemple 10 avec les mêmes réactifs, sauf en ce qui concerne l'hydroquinone remplacée par de la phénothiazine, les conditions opératoires étant les suivantes:

— quantité de polycarbonate: 89 g
— quantité d'isocyanate: 35 g
— quantité d'hydroxyéthylacrylate: 23,2 g
— température de réaction: 60° C
— masse de produit obtenu: 135 g
— rendement: 92%
— taux d'insaturations conjuguées:
théorique: 1,36 Eq/kg
trouvé: 1,84 Eq/kg

*Exemple 12:*

On procède selon le mode opératoire de l'exemple 10, les réactifs utilisés étant le toluènediisocyanate, l'hydroxyéthylacrylate et un polycarbonatediol de masse molaire 1100 obtenu par phosgénation d'un mélange de butanediol-1,4 et d'hexanediol-1,6 dans des proportions telles que le polycarbonate obtenu soit équivalent à un mélange de 50% en masse d'un polycarbonate obtenu à partir d'hexanediol-1,6 seul et de 50% en masse d'un polycarbonate obtenu à partir de butanediol-1,4 seul. Les conditions opératoires sont les suivantes:

— quantité de polycarbonate: 110 g
— quantité d'isocyanate: 35 g
— quantité d'hydroxyéthylacrylate: 23,2 g
— température de réaction: 65° C
— masse de produit obtenu: 160 g
— rendement: 96%
— taux d'insaturations conjuguées:
théorique: 1,19 Eq/kg
trouvé: 1,55 Eq/kg

*Exemple 13:*

On procède comme indiqué dans l'exemple 12, les conditions opératoires étant les suivantes:

— quantité de polycarbonate: 110 g
— quantité d'isocyanate: 35 g
— quantité d'hydroxyéthylacrylate: 23,2 g
— température de réaction: 65° C

— masse de produit obtenu: 155 g
— rendement: 92%
— taux d'insaturations conjuguées:
théorique: 1,19 Eq/kg
trouvé: 1,42 Eq/kg

*Exemples 14 à 21:*

On a formulé en compositions photoréticulables certains des poly(carbonates-uréthannes) à insaturations acryliques obtenus dans les exemples précédents. Les formulations utilisées étaient les suivantes:

— poly(carbonate-uréthanne) insaturé: 80 parties en poids
— vinylpyrrolidone: 20 parties en poids
— benzophénone: 2,5 parties en poids
— diméthylaminoéthanol: 2,5 parties en poids.

La vinylpyrrolidone est un solvant réactif, le couple benzophénone et diméthylaminoéthanol joue le rôle de photo-initiateur.

A titre de comparaison, on a formulé une composition analogue en remplaçant le poly-(carbonate-uréthanne) insaturé par un poly-(esteruréthanne)acrylique, qui est obtenu par condensation du toluènediisocyanate et de l'hydroxyéthylacrylate sur un polyesterdiol résultant de la condensation de 4 mol d'acide adipique avec 1 mol de butanediol-1,3 et 4 mol d'hexanediol-1,6.

On a également formulé une composition analogue en remplaçant le poly(carbonate-uréthanne) insaturé par un polycarbonate acrylique obtenu par réaction de l'acide acrylique sur un polycarbonatediol obtenu par phosgénation du triméthylolpropane et d'un mélange hexanediol-1,6 et butanediol-1,4 de masse molaire 1000, les proportions de triméthylolpropane et de diols étant telles:

— qu'il y ait statistiquement une molécule de triméthylolpropane par chaîne de polymère, et
— que le polycarbonate obtenu soit équivalent à un mélange de 50% en masse d'un polycarbonate obtenu à partir du triméthylolpropane et du butanediol seul et de 50% en masse d'un polycarbonate obtenu à partir du triméthylolpropane et de l'hexanediol seul.

Ces différentes formulations ont été étalées sur des plaques d'aluminium. La photoréticulation a été faite par exposition sur support fixe sous une lampe UV d'une puissance de 80 W/cm pour une longueur de lampe de 5 cm, soit une puissance totale de 400 W, la distance lampe-vernis étant de 7,5 cm. Chaque formulation a été étalée sur 3 supports différents qui ont subi des temps d'irradiation respectifs de 5 s, 10 s et 30 s. On a constaté que les films obtenus à partir des formulations à base de poly(carbonates-uréthannes) insaturés selon l'invention présentaient une adhérence sur le support supérieure à celles présentées par les films obtenus à partir des formulations à base de poly(ester-uréthanne) acrylique. On a mesuré la dureté Persoz des différents films ainsi obtenus, les résultats sont indiqués dans le tableau III.

Tableau III

| Exemple | Polymère de base | Dureté Persoz | | |
|---|---|---|---|---|
| | | après 5 s | après 10 s | après 30 s |
| 14 | Poly(carbonate-uréthanne) insaturé de l'exemple 10 | 29 | 58 | 124 |
| 15 | Poly(carbonate-uréthanne) insaturé de l'exemple 11 | 30 | 60 | 121 |
| 16 | Poly(carbonate-uréthanne) insaturé de l'exemple 12 | 23 | 36 | 100 |
| 17 | Poly(carbonate-uréthanne) insaturé de l'exemple 13 | 23 | 46 | 109 |
| 18 | Poly(carbonate-uréthanne) insaturé de l'exemple 2 | 44 | 70 | 150 |
| 19 | Poly(carbonate-uréthanne) insaturé de l'exemple 3 | 51 | 90 | 174 |
| 20 | Poly(ester-uréthanne) acrylique | 15 | 24 | 49 |
| 21 | Polycarbonate acrylique | 18 | 32 | 34 |

## Revendications

1. A titre de produits industriels nouveaux, les poly(carbonates-uréthannes) à insaturations acryliques de formule:

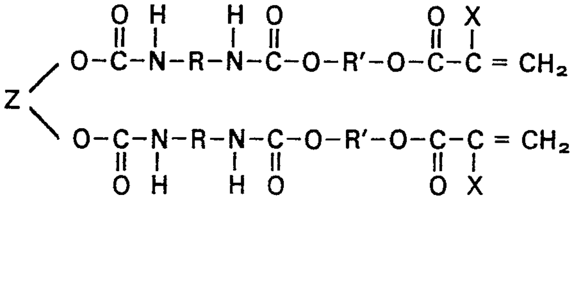

dans laquelle:

— X représente soit l'hydrogène, soit le groupe méthyle,
— R représente un reste alkylène, cycloalkylène ou arylène, substitué ou non substitué,
— R' représente un reste alkylène inférieur,
— Z représente une chaîne polycarbonate provenant d'un polycarbonate linéaire aliphatique ou cycloaliphatique hydroxytéléchélique, de masse molaire comprise entre 500 et 3000, et
— C, H, N, O représentent respectivement le carbone, l'hydrogène, l'azote et l'oxygène.

2. Poly(carbonates-uréthannes) à insaturations acryliques selon la revendication 1, caractérisés en ce qu'ils répondent à la formule:

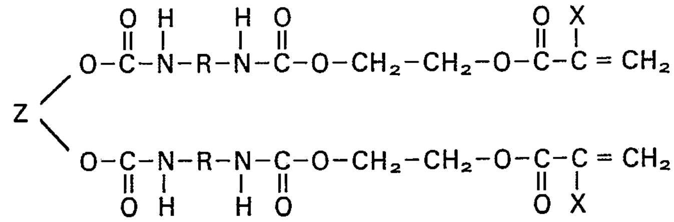

dans laquelle:
- X représente soit l'hydrogène, soit le groupe méthyle,
- R représente un reste alkylène, cycloalkylène ou arylène, substitué ou non substitué,
- Z représente une chaîne polycarbonate provenant d'un polycarbonate linéaire aliphatique ou cycloaliphatique hydroxytéléchélique, de masse molaire comprise entre 500 et 3000, et
- C, H, N, O représentent respectivement le carbone, l'hydrogène, l'azote et l'oxygène.

3. Compositions photoréticulables comprenant un polymère insaturé, un monomère insaturé et un photo-initiateur, caractérisées en ce que ledit polymère insaturé est un poly(carbonate-uréthanne) à insaturations acryliques selon la revendication 1.

4. Compositions photoréticulables selon la revendication 3, caractérisées en ce que le monomère insaturé est choisi dans le groupe constitué par le triacrylate de pentaérythritol, le triacrylate de triméthylolpropane, le diacrylate d'hexanediol-1,6.

5. Compositions photoréticulables selon l'une quelconque des revendications 3 à 4, caractérisées en ce que le photo-initiateur est choisi dans le groupe constitué par les éthers de la benzoïne, les dérivés de l'acétophénone, la benzophénone en mélange avec une amine.

6. Films obtenus par photoréticulation d'une composition selon l'une quelconque des revendications 3 à 5.

## Patentansprüche

1. Poly(carbonaturethane) mit Acrylgruppen als ungesättigten Gruppen der Formel:

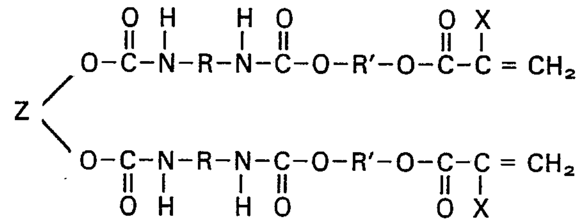

in der bedeuten:
X Wasserstoff oder Methyl,
substituiertes oder nicht substituiertes Alkylen, Cycloalkylen oder Arylen,
R ' niederes Alkylen, und
Z eine von einem linearen aliphatischen oder cycloaliphatischen Polycarbonat mit Hydroxyendgruppen stammende Polycarbonatkette mit einem Molekulargewicht von 500 bis 3000,
und C, H, N, O beziehungsweise Kohlenstoff, Wasserstoff, Stickstoff und Sauerstoff.

2. Poly(carbonaturethane) nach Anspruch 1, gekennzeichnet durch die Formel:

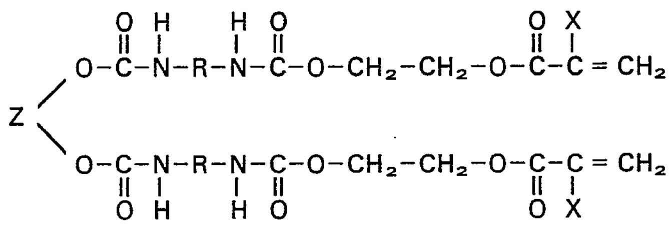

in der bedeuten:
X Wasserstoff oder Methyl,
R substituiertes oder nicht substituiertes Alkylen, Cycloalkylen oder Arylen, und
Z eine von einem linearen aliphatischen oder cycloaliphatischen Polycarbonat mit Hydroxyendgruppen stammende Polymerkette mit einem Molekulargewicht von 500 bis 3000,
und C, H, N, O beziehungsweise Kohlenstoff, Wasserstoff, Stickstoff und Sauerstoff.

3. Lichtvernetzbare Zusammensetzungen mit einem ungesättigten Polymer, einem ungesättigten Monomer und einem Photoinitiator, gekennzeichnet durch ein Poly(carbonaturethan) mit Acrylgruppen als ungesättigten Gruppen nach Anspruch 1 als ungesättigtes Polymer.

4. Lichtvernetzbare Zusammensetzungen nach Anspruch 3, gekennzeichnet durch ein ungesättigtes Monomer, das ausgewählt ist unter Pentaerythrittriacetat, Trimethylolpropantriacrylat und Hexan-1,6-dioldiacrylat.

5. Lichtvernetzbare Zusammensetzungen nach einem der beiden Ansprüche 3 oder 4, dadurch gekennzeichnet, dass der Photoinitiator ausgewählt ist unter Benzoinäthern, Acetophenonderivaten und Benzophenon im Gemisch mit einem Amin.

6. Filme, erhalten durch Lichtvernetzung einer Zusammensetzung nach einem der Ansprüche 3 bis 5.

## Claims

1. By way of new industrial products, the poly(carbonate-urethanes) with acrylic unsaturations of the formula:

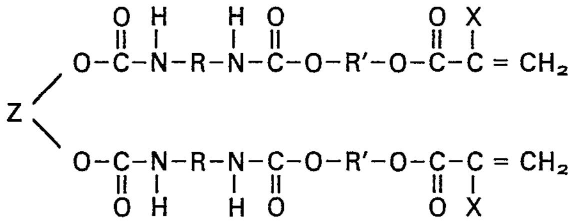

in which:

X represents either hydrogen or the methyl group,

R represents a substituted or unsubstituted alkylene, cycloalkylene or arylene radical,

R' represents a lower alkylene radical,

Z represents a polycarbonate chain originating from a hydroxytelechelating, aliphatic or cycloaliphatic, linear polycarbonate having a molecular weight of between 500 and 3,000, and

C, H, N and O respectively represent carbon, hydrogen, nitrogen and oxygen.

2. Poly(carbonate-urethanes) with acrylic unsaturations according to claim 1, characterized in that they correspond to the formula:

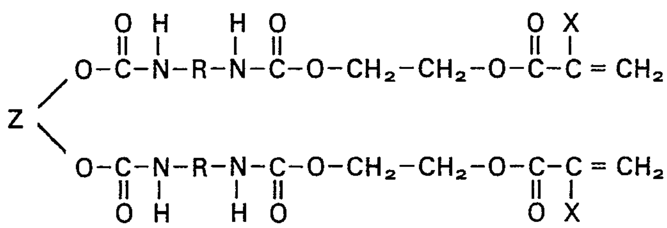

in which:

X represents either hydrogen or the methyl group,

R represents a substituted or unsubstituted alkylene, cycloalkylene or arylene radical,

Z represents a polycarbonate chain originating from a hydroxytelechelating, aliphatic or cycloaliphatic, linear polycarbonate having a molecular weight of between 500 and 3,000, and

C, H, N and O respectively represent carbon, hydrogen, nitrogen and oxygen.

3. Photocrosslinkable compositions comprising an unsaturated polymer, an unsaturated monomer and a photo-initiator, characterized in that the said unsaturated polymer is a poly (carbonate-urethane) with acrylic unsaturations according to claim 1.

4. Photocrosslinkable compositions according to claim 3, characterized in that the unsaturated monomer is chosen from the group comprising pentaerythritol triacrylate, trimethylolpropane triacrylate and hexane-1,6-diol diacrylate.

5. Photocrosslinkable compositions according to any one of claims 3 and 4, characterized in that the photo-initiator is chosen from the group comprising benzoin ethers, acetophenone derivatives, and benzophenone in a mixture with an amine.

6. Films obtained by the photocrosslinking of a composition according to any one of claims 3 to 5.